(19) Europäisches Patentamt
European Patent Office
Office européen des brevets

(11) EP 2 216 419 B1

(12) **EUROPEAN PATENT SPECIFICATION**

(45) Date of publication and mention of the grant of the patent:
**02.07.2014 Bulletin 2014/27**

(21) Application number: **09014285.2**

(22) Date of filing: **16.11.2009**

(51) Int Cl.:
***C22B 5/10*** (2006.01) ***C22B 5/14*** (2006.01)
***C22B 7/02*** (2006.01) ***C22B 19/30*** (2006.01)
***C22B 19/34*** (2006.01) ***C22B 13/02*** (2006.01)
***F27B 7/00*** (2006.01) ***C21B 13/00*** (2006.01)
***C21B 13/08*** (2006.01) ***C22B 19/04*** (2006.01)

# (54) The technology of refining metallic wastes containing zinc in a rotary furnace

Technologie zur Raffinierung von Metallabfällen mit Zink in einem Drehbrennofen

Technologie d'affinage des déchets métalliques contenant du zinc dans un four rotatif

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.02.2009 CZ 20090075**

(43) Date of publication of application:
**11.08.2010 Bulletin 2010/32**

(73) Proprietors:
- **Adelt, Milan**
  **27201 Kladno (CZ)**
- **Raclavsky, Milan**
  **70800 Ostrava-Poruba (CZ)**
- **Moulis, Vlastimil**
  **33843 Mirosov (CZ)**
- **Gora, Pavel**
  **73961 Trinec (CZ)**
- **Leitner, Ekhard**
  **1090 Vienna (AT)**

(72) Inventors:
- **Adelt, Milan**
  **27201 Kladno (CZ)**
- **Raclavsky, Milan**
  **70800 Ostrava-Poruba (CZ)**
- **Moulis, Vlastimil**
  **33843 Mirosov (CZ)**
- **Gora, Pavel**
  **73961 Trinec (CZ)**
- **Leitner, Ekhard**
  **1090 Vienna (AT)**

(74) Representative: **Plicka, Josef et al**
**Cermák a spol.**
**Elisky Peskove 15/735,**
**150 00 Praha 5 (CZ)**

(56) References cited:
**EP-A1- 0 275 863** **EP-A1- 1 088 904**
**WO-A1-98/04755** **GB-A- 2 004 854**
**JP-A- 7 011 354** **JP-A- 56 000 236**
**US-A- 4 238 222** **US-A- 4 525 208**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 216 419 B1

## Description

The invention concerns the technology and equipment needed for refining metallic wastes that are unsuitable for direct processing in a blast furnace and other steel-making equipment as a result of the high contents of zinc, lead, and cadmium, including slurries and dust associated with the steel-making processes. As a rule, the zinc content in the blast-furnace charge is limited to 150 g of zinc per ton.

The principle of the process concerned is the reduction of zinc, lead, and cadmium oxides, from which the gases of said metals originate, their subsequent oxidation on the combustion front and in the furnace oxidation zone creating dust that can easily be exhausted from the free space above the furnace charge where, simultaneously with the evaporation of zinc, lead, and cadmium, iron is reduced with a resulting charge metallisation of 25 to 100%.

The essential features of the process are the separation of the oxidation and reduction zones in a rotary furnace and intense heat and mass transfer.

The reduction zone is located in the furnace part accommodating the charge in a condensed form that, as a result of the actions of heat and reduction processes, is gradually modified into an output product with a significantly reduced zinc, lead, and cadmium content. The reduction environment in the furnace is created by the addition to the furnace charge of materials with a high carbon content.

The oxidation zone is located above the charge where the combustion products are found and where the reduction products, mainly carbon monoxide and metals including zinc in gaseous form, are oxidised to produce gases and dust. The oxidation zone is created by feeding a sufficient quantity of oxygen or hot air into the space above the charge to ensure that the $CO_2$ content in the combustion products at the end of the rotary furnace is at least twice as high as that of CO.

As metallurgical wastes today tend to contain ever larger quantities of zinc, the separation of zinc from metallic wastes has become an issue. The key process parameter is the length of time the charge stays in the furnace following the separation of zinc (and lead and cadmium) from the input material. The refining process products are reduced iron, exhausted dust rich in zinc, lead, and cadmium, and inert slag.

## State-of-the-art technology

A number of waste-processing technologies are currently being developed. This fact is indicative of the existing problems with the processing of metallic wastes and the growing awareness of the ecological aspects of metallurgical processes in general. So far, there has been no winner in the race for the best waste-processing methods and the most efficient and controlled waste refining. The following process solutions are being considered or implemented:

- direct charge reduction in a rotary carrier furnace; this technology has been developed and introduced on an industrial scale in Japan, while similar development projects in Europe have been discontinued;
- charge-melting processes in an electric-arc furnace - a modem trend, in particular in Europe;
- charge reduction and smelting in a rotary furnace; a solution currently in the development stage.

A review of the present state of affairs has revealed (see below) that various technologies for the processing of metallic ores and wastes have been developed and some of them are at the stage of initial industrial implementation. The processes are mainly intended for rich ores and the associated equipment is suited to the commercial production of directly reduced products.

The ZERO WASTE process is a technology for the processing of steel-making slag aimed at the reduction of easily-reduced oxides of metals such as iron, manganese, and, in the case of wastes from the stainless steel-making processes, chromium, nickel, and molybdenum, with modification of the slag composition so that the final product can be used as a hydraulic binding agent. The process, which is carried out in a ladle-furnace type of equipment, implies reduced generation of $CO_2$. This technology was tested within an EU-sponsored project on pilot equipment at the company VÍTKOVICE - Strojírenství. The main technical challenges here are the lifetime of the injection tubes, slag fluidity control, and the shape and design of the furnace.

The PRIMUS process started a trial run in 2000. At present the technology is used for the processing of dust exhausts from electric-arc furnaces and scale from rolling mills. The process is based on the Herreshoff-Wedgen multi-storey stoking furnace, which was frequently used in the past for ore roasting. The material is continuously fed to the central part of the platform at the top storey of the furnace, where stoking arms stir and transfer it to the platform edge, from where it falls to the bottom storey. The furnace is vertically divided into several zones, where various chemical reactions take place, corresponding to the zone temperatures. In the top zone the charge is dried, and in the middle zone it is pre-heated and calcined, while any oils present evaporate. In the bottom zone, with the highest temperature, the charge is reduced and zinc and lead evaporate. These metals are consequently re-burnt and leave the process in the form of dust. After a year's operation, the equipment had not attained its projected capacity. The reason for this failure is the re-calcination of the iron oxides at the process stage when the distillation of oils and of the volatile coal constituents has been completed. During the re-calcining process, ferrous carbonate tends to stick to the stirring arms, meaning that the material flow through the furnace is disrupted. Even though this equipment provides for the satisfactory refining of metallic wastes, its complexity and operational problems make it rather inefficient and cast doubts on the feasibility of a return on the associated investments.

The company NIPPON STEEL developed the NSC process, consisting of charge smelting and reduction in a pit furnace. The furnace fuel is municipal waste. In the pit furnace the wastes are smelted and vitrified. The exhaust gases, which have a high content of chemical heat, are utilised in associated equipment. NSC plants are widely used for municipal waste processing. An important part of the technology is waste feeding at various furnace levels.

The Comet process uses a rotary hearth furnace (RHF). The hearth is rotated at the centre of a circular furnace tunnel and a mixture of dry crushed coal and iron ore spread in a thin layer is continuously fed into it. For the purposes of desulphurisation, small quantities of limestone or slaked lime are mixed with the coal. In connection with the extension of the pilot equipment to an industrial plant with a capacity of 750 kt/year, several serious problems arose. The temperatures in the hearth zone increased to 1425-1520°C, as a result of which the dust generated during the process reacted at such high temperatures with the furnace lining, causing its rapid degradation. The process stability was not satisfactory even prior to the intended enlargement of the pilot equipment (by about 50 times). Neither was it possible to achieve the desired homogeneity of the material (mixing of the charge components) necessary for the smooth refining of metallic wastes.

Midrex, jointly with Kobe Steel, developed their proprietary process ITMK3, consisting of the reduction of metallic wastes in a rotary carrier furnace. The pilot equipment of this type, with a hearth diameter of 4 m, was erected at the Kakogawa Works. The size of the pilot equipment indicates that the process is still in the stage of development. The leading idea of the separation of the slag and metal phases in a semi-liquid state is very interesting. What is demanding from the technological point of view is the preparation of the pellets and the stabilisation of their chemical and phase composition. A specific problem is the potential interaction of the slag phase with the ceramic parts of the furnace hearth.

The purpose of the OXYFINE process is the sintering and drying of powder materials. It facilitates the processing of sediments transported either by pressure air or a sludger. The waste is injected into the centre of an oxy-gas burner flame, where it melts and the combustible components burn up. The oxidation level is low. For example, this method is suitable for the processing of fell fractions from the FeSi production process. During the waste processing the solid particles melt and the slag accumulates at the bottom of the reactor vessel. The burner flame can melt both dry and wet wastes (up to a humidity content of 65%). The essential precondition for the correct functioning of the method is the perfect dispersal (atomisation) of the waste processed.

The CONTOP process uses melting cyclone equipment for melting materials at very high temperatures (between 1800 and 2000°C). It is suitable for melting both metals and metal oxides. As reduction cannot be achieved in the melting zone, the process developers plan to add to the cyclone a fixed hearth where reduction could take place, if needed. The equipment is intended for the processing of hazardous wastes such as old paints or organic wastes, the liquidation of which is generally difficult. The heat generated may be used for heating purposes.

The TECNORED low-shaft vertical furnace is being developed as a joint project by DANIELI-CORUS as an alternative pig-iron production process, eliminating the need for coke. This process, allegedly suitable for waste processing too, is based on long-term experience with the development of low-shaft vertical kilns in the former German Democratic Republic and in Liège, Belgium in the 1950s. The development work is still continuing. The main advantages of the process consist of the use of self-reducing pellets and the splitting of the furnace shaft. The problematic aspect appears to be the generation of the hot-air blast needed for the processing of wastes containing greater quantities of zinc. The processing of wastes containing zinc is accompanied by the generation of large quantities of dust, causing a deterioration of the heat transfer in the recuperators. The published process information is silent about the interaction between the dust and furnace charge, reduced furnace throughput, and the associated lower quality of the metallic waste refining process.

The main problems associated with the OXYCUP process used for the removal of Zn from metallic wastes (where the Zn content is between 0.5 and 5%) are the low boiling-point temperature of the metal and high boiling-point temperatures of the metal oxides. Metallic-zinc vapours condense easily, while the oxides remain at metallurgical temperatures in solid state. Another problem arises because the oxidised Zn vapours produce very fine dust that adheres to practically all types of surfaces. In general, the behaviour patterns of Zn and Pb are rather complex. In slurry, these elements do not appear in their metallic form and oxides only; interactions between zinc oxides and iron oxides give rise to complex forms, where the situation may further be complicated by the presence of chlorides and fluorides.

The technology used for iron ore processing in a rotary furnace with the reduction of iron and ore is well known. There are different types of design of the inner furnace cylinder where iron reduction may take place in either a solid or liquid condition. However, the most frequently used type is reduction in a pasty condition (so-called nodulising). Here the furnace is longer and the output temperature higher. Under suitable conditions the reduced iron forms clusters (nodules). The whole process is called nodulising and the furnace segment where the nodules are formed is known as the nodulising range. Nodulising requires temperatures of 1250 to 1300°C and a special design of the neck ring at the furnace output, ensuring the balanced reducing and oxidising environment necessary for the formation of the nodules. Moreover, the slag needs to have a specific viscosity so as to prevent the nodules from sinking and sticking to the furnace lining. A certain degree of slag acidity needs be maintained too; that is why nodulising is primarily suitable for the processing of acidic ores. A typical nodulising plant includes furnaces 60 m long and with an external diameter of 3.6 m. The furnace rotation speed is approximately 1 r.p.m. However, larger furnaces can also be found. The nodule size depends on the viscosity of the slag and the length of the nodulising range where, under optimum conditions, most nodules are 2 to 8 mm in diameter. The most common problems associated with this technology are the process efficiency and short lifetime of the furnace lining. The subsequent processing of the nodules depends on their composition. They usually have a high phosphorus and sulphur content and are used as a charge component in blast furnaces. They may also be added to electric furnaces at the cost of extended periods of dephosphorising and desulphurising. Attempts have also been made to melt nodules in cylindrical furnaces where desulphurising was taken care of by solid lime. However, such furnaces are primarily used as metallurgical equipment for iron and ore reduction, not for the purposes of metal waste refining and the controlled separation of Zn, Pb, and Cd.

The advantages of rotating furnaces in the field of iron- and steel-making have given rise to numerous technologies and patented processes. Regarding steel-making, the following patent documents are known:

EP 0134336, describing the use of a rotating furnace in combination with secondary metallurgy and continuous steel casting;
EP 0933436, describing the use of a rotating furnace for the melting and heating of directly reduced iron and its desulphurisation;
WO 94/11536, describing a continuous rotating furnace divided into two sections, where Section One is used for preheating and smelting and Section Two for heating the molten metal to the required temperature. Section Two includes equipment for injecting carbon into the molten metal;
WO 95/29137, describing the removal of slag from metallurgical equipment, including rotating furnaces;
WO 99/60172, describing a continuous rotating furnace divided into two sections, where Section One is used for preheating and smelting and Section Two for heating the molten metal to the required temperature. Section Two includes equipment for injecting carbon into the molten metal. Vacuum equipment, the purpose of which is pumping the molten steel from the rotating furnace, is attached to the end of Section Two;
EP 0275863, describing equipment which uses an inclined rotary reduction smelter vessel.
US 4105438 describes rotating furnace equipment and the removal of molten steel by vacuum suction;
US 3991987, describing a combination of a rotating furnace and electric-arc furnace. The purpose of the rotating furnace is heating the molten metal to the required temperature;
US 3514280, describing a continuous process of steel-making by melting in a rotating furnace. The rotating furnace is equipped with a pair of burners located opposite each other. The molten metal leaves the furnace through a siphon device;
US 4062674, describing a high-speed rotating furnace for iron- and steel-making. The speed of rotation is so high that the centrifugal force keeps the furnace charge pressed against the internal furnace body;
US 3689251, describing a combination of rotating furnaces for the direct reducing and subsequent smelting and processing of molten steel;
US 5163997, describing equipment for continuous steel-making by melting in a rotating furnace. The rotating furnace is divided into two sections and equipped with a pair of burners located on opposite sides of the furnace. The burner at the charging end serves the purpose of finish burning and the pre-heating of the solid charge;
WO 91/07127, describing a rotating furnace for burning hazardous wastes and the subsequent melting of the resulting slag;
EP 0442040, describing equipment for pellet reducing, and
EP 0982407, describing equipment for the melting of inorganic substances injected under a flame.

Regarding metal casting, the following patent documents are known:

US 5141208, describing a series combination of two furnaces, of which one serves the purpose of metal smelting and the other is used for pre-heating, and
EU 0673887, describing furnaces commonly used for metal casting.

Since 2000, the interest in rotating furnaces in the U.S.A. has remained high.

US 2001/6012 describes equipment for continuous metal smelting in a rotating furnace. The equipment includes several nozzles, burners, and a conveyor for continuous furnace charging. The heat generated in the combustion products from the melting zone is used to pre-heat the charge in the respective furnace section.

US 2002/130448 describes a rather complex piece of equipment including a rotating furnace and used for the production of pig-iron or steel directly from iron ore. The equipment further includes a reactor where metal oxides in gaseous form are reduced. The reducing reactor may be a pit furnace, but the author of the patent is of the opinion that any equipment facilitating the direct reduction of oxides in gaseous form may be used. The partly reduced product, in a hot condition, is transferred to a long rotating furnace, where the reduction and melting are completed. The same equipment permits the decarbonisation of the charge. Therefore the patent documentation describes universal continuous-process equipment in which the individual process stages are separated and executed in specific equipment zones.

EP 0441052 and US P 5188658 describe equipment based on an electric-arc furnace for the processing of wastes, including zinc. Apart from the waste-processing equipment itself, the patent describes a special furnace atmosphere: a slightly reducing environment with a $CO_2$ to CO ratio below 0.3. Evaporated zinc and other volatile metals are trapped in metallic forms.

CZ 295780 concerns a steel-making process using a rotating furnace including the processing of metallurgical wastes on molten iron with a higher carbon content. The limitation of this technology is the composition of the charge, in which the waste content should not exceed 50%. The output of the patented process is molten metal to be further processed using standard steelworks technologies. The processing of a charge with a lower waste content ensures a lower zinc content in the separated dust.

CZ 297878 concerns the processing of metallic wastes with a relatively high zinc content (in excess of 5%). The patent does not specify any pre-processing of the raw material or subsequent removal of iron from the zinc concentrate.

## The essence of the patent

The patent concerns the refining of metallic wastes containing zinc and their conversion to usable raw material using fossil fuels and oxygen or air with a higher oxygen content or preheated air in a rotating oven-type furnace. The proposed method consists of reducing metallic wastes including zinc, lead, and cadmium and their controlled refining in a rotating oven-type furnace or a group of rotating oven-type furnaces operated on a batch or continuous basis under conditions of intensive heat transfer and a specific refining process schedule to ensure the composition of the output product and a consistency suitable for subsequent processing using standard metallurgical equipment. Said conditions can be created in a rotating oven-type furnace where the heat source is fossil fuels in combination with oxygen or air with an increased oxygen content or preheated air. The desired production capacity can be achieved by selecting a rotating oven-type furnace of an appropriate size or a group of such furnaces. Unlike the conditions in other similar equipment, good heat transfer is ensured by the stirring of the charge.

The processed wastes result in the following three products:

- directly reduced iron in the form of sponge iron, nodules, or in a molten state;
- separated dust rich in zinc, lead, and cadmium oxides representing in excess of 30% of the total content;
- inert slag suitable for subsequent use in civil engineering or metallurgy.

The processing of metallic wastes takes place in a rotating oven-type furnace or a group of such furnaces where the rotating oven-type-furnace is filled with processed wastes up to 50% of its internal volume, which makes possible the free passage of gases above the charge and the easy removal of dust particles rich in zinc, lead, and cadmium from the furnace. In this arrangement there are two clearly separated zones in the furnace space: a reducing environment zone in the part of the furnace containing the charge in the condensed phase in the presence of carbon and carbon monoxide, and an oxidation environment zone above the charge, where the gaseous products of the reduction process are finish burnt, the fossil fuels are burnt with oxygen, and the evaporated gases oxidised so that they eventually leave the furnace space in the form of dust.

Prior to processing, the wastes need to be granulated in order to minimise the furnace fly loss. Granulation consists of mixing the wastes with other substances such as flux, reduction agents, and binding agents, where the resulting share by weight of particles 1 mm and larger in size must be at least 50%. Carbon-based reducing agents can be added to the prepared granulate, and that either prior to charging or into the furnace. Addition in the furnace has the advantage of affecting the reduction capabilities of the granulated charge in the selected part of the furnace. Carbon added to the furnace is either injected by means of a nozzle or by using a conveying screw or in batches using a hopper mechanism.

The reduction process in a rotating oven-type furnace provides for the effective separation of slag, iron, and dust rich in zinc, lead, and cadmium oxides suitable for subsequent processing, where the ZnO content in the separated dust is proportional to the actual zinc content in the processed charge.

The process described above ensures that the zinc, lead, and cadmium content in the output product is at least 20 times greater than that in the charge, where the total zinc, lead, and cadmium content was less than 1%, and at least 10 times greater than that in a charge with a total zinc, lead, and cadmium content between 1 and 2.5%, and, in the case of a total zinc, lead, and cadmium content in the furnace charge in excess of 2.5%, the content of these elements in the output concentrate is at least 25%.

The necessary reaction temperature is provided by means of an oxygen burner using any gaseous, liquid, or solid fuels, such as hydrocarbons or powdered coal. The high process efficiency is the result of intense heat transfer, facilitating the overall thermal efficiency of the heating process and reduction processes and of melting the metallic wastes (if applicable). The process ensures the attainment of an almost perfect finish burn of the reduced materials and a high degree of fuel utilisation.

Processing metallic wastes consists of the reduction of wastes containing zinc, lead, and cadmium by carbon, where the reduction may occur in the solid, semisolid, or liquid condition of the furnace charge. The controlled reduction process not only facilitates a progressive reduction of the zinc, lead, and cadmium content in waste materials, but also provides for the control of the consistency of the output semi-product with respect to its subsequent metallurgical processing.

Reduction in a solid state is understood to take place if the share of the melt in the mixture of reduced oxides is less than 20% and the reduction temperature does not exceed 1350°C. In most cases, the basicity of the ballast oxides such as CaO, $SiO_2$ MgO, or $Al_2O_3$ need not be modified as the overall waste basicity is sufficient; only exceptionally is the ratio of CaO to $SiO_2$ adjusted to be higher than 1.5 so as to facilitate desulphurisation. The whole process is sensitive to the composition of the slag. In waste processing, pulverised carbon is added to the charge that is intended to be reduced in a solid state, so that the charge-mixing action ensures contact between the oxides and carbon and the reduction process may take effect, whether continually or batch-wise. The reduced metal is magnetically separated, briquetted, or directly used in the steelworks as a replacement for steel scrap or for the enrichment of the blast-furnace charge.

Reduction in a semi-liquid or liquid state at temperatures in excess of 1150°C. The reduced metal will be carburised by the excess carbon in the reduced charge, which reduces the metal melting temperature to below that needed for reduction. The carburised drops of metal in the highly viscous slag eventually combine to form nuggets with dimensions larger than 2 mm. The formation of the nuggets is contingent upon the presence of viscous slag.

The equipment described in this invention facilitates the processing of metallic wastes containing zinc, lead, and cadmium. The equipment consists of one or more rotating oven-type furnaces arranged in a battery formation to achieve the desired production capacity. The charge is fed to the furnace either continuously, which implies that throughout at least 60% of the reduction time metallic wastes containing zinc, lead, and cadmium are added to the furnace, or batch-wise. Depending on the processing method, the furnaces have different L/D ratios (L = furnace length, D = internal furnace diameter). Furnaces for batch waste processing have an L/D ratio less than 10, while furnaces for the continuous process have an L/D ratio greater than 10. An internal furnace space filled up to no more than 50% with processed wastes has two clearly separated zones, where Zone 1, with a reduction environment including carbon and carbon monoxide, is the part of the furnace space containing the charge in the condensed phase, and Zone 2, with an oxidising atmosphere, is found above the charge where the reduction products are finish burnt, the fossil fuels are burnt in the presence of oxygen, and the evaporated metals, in particular zinc, are oxidised. The dust fractions thus formed are removed from the furnace space, and so the $CO_2$ content in the exhaustion channel is approximately twice as high as that of CO.

The oxygen needed for the above reactions is supplied to the furnace via an oxygen burner or, if need be, via an additional oxygen nozzle with independent flow-rate control.

The reduced material removed from the furnace is deposited in a cooler, where it is cooled in an environment with limited oxygen access (the cooling agent is not only the air alone).

The main advantage of the method, as of this invention, is the direct utilisation of the chemical potential of fossil fuels for the heating, reduction, and melting of the charge (if applicable). The technical solution, consisting of the separation of the zones with oxidation and reduction atmospheres, makes possible the full utilisation of the chemical heat content in the fuel. The rotating oven-type furnace increases the overall thermal efficiency further, as its design facilitates a very good heat transfer. The main differences of the method, as of this invention, from the conventional methods of direct reduction in rotating furnaces are the harmonisation of the technological process with charge materials rich in volatile substances, such as zinc or lead, the optimisation of the slag function with respect to the temperature and type of reaction in progress, and, finally, the production of directly reduced iron, zinc concentrate, and inert slag. In particular, it is the parallel production of DRI and zinc concentrate which makes this process different from the other known methods of ore processing in rotating furnaces. Regarding the design of the equipment, the method described here uses a relatively small and compact piece of equipment for waste processing, and the relatively low investment costs and the simplicity of the process are the main assets in comparison with other waste processing processes. In the cases of furnaces arranged in batteries, it is possible to utilise most efficiently the capacities of the associated waste gas cleaning station, charging equipment, and others. The tandem arrangement of furnaces is advantageous in terms of the efficiency of the pre-heating of the charge. From the technological point of view, the advantage of the process consists of the direct utilisation of the chemical potential of fossil fuels for the processing of metallic wastes. The process itself facilitates control over the degree of contact of the solid charge with the combustion products.

**Comments on graphs/figures**

Figure 1 shows the key characteristics of the process of metallic waste treatment in solid state with special regard to the gradual decrease of the zinc content in the furnace charge. The graph is based on recalculated values with respect to the total iron content and does not take into consideration the chemically-bound water content.

Figure 2 is an example of the progress of reduction in a solid state with special regard to the changes in the iron forms.

During the initial heating stage, the wastes are subjected to minor oxidation with the growing $Fe_2O_3$ content. Upon reaching a temperature of 900°C, the rate of the reduction process is significantly increased, as a result of which, after slightly more than two hours, 90% metallisation is achieved.

Figure 3 shows examples of the composition of the removed dust following magnetic separation of the iron particles with respect to the actual zinc and lead content in the furnace charge.

**Practical examples of equipment based on the invention**

**Example 1 Metallic waste refining technology using reduction in solid state and batch-wise waste feeding into rotating furnace**

The equipment and technology have been designed to ensure the maximum thermal efficiency and minimum oxidation, within reasonable limits, of the charge and of the material reduced earlier. The requirements that it is necessary to satisfy include a high flame temperature, good heat transfer, and a strong reduction atmosphere in the furnace. The equipment proposed meets these requirements as follows: the high flame temperature is achieved by burning fossil fuels in combination with oxygen or a mixture of oxygen and preheated air. The reduction atmosphere is created by the addition of powdered coal, anthracite, coke, or semicoke, or other substances with a high carbon content. The reduction materials are added in a more than sufficient quantity. In the case of this equipment, the reduction temperature does not exceed 1200°C.

Intense heat transfer is achieved by combining several heat-transfer mechanisms, such as:

- direct heating by a flame of the furnace charge at the stage when the surface temperature of the charge is still low;
- flame heat radiation on the charge and furnace lining upon reaching the charge surface temperature of 900°C;
- other heat transfer mechanisms associated with the operation of the rotating furnace:

    o agitation of the charge, in which relatively cool material appears on or close to the surface and heated material is transferred from the surface inside the charge bulk;
    o the mixing action moves the heated material inside the charge bulk, where it transfers heat to the surrounding cooler material;
    o heat from the furnace lining is transferred to the charge material coming into contact with the furnace body.

The proposed process is based on the reduction of a solid charge of metallic wastes containing zinc, lead, and cadmium with an aggregate content between 0.5 and 5% using fossil fuels in an environment of intense heat transfer, where the zinc content is not limited by the process. Suitable process conditions are created in a rotating furnace. Sufficient heat transfer is facilitated by the agitation of the charge and the large area available for heat transfer: the charge is heated not only from the top, but also from the bottom.

The method used for the processing of metallic waste is similar to that used for ore processing in rotating furnaces. The main difference on the waste-processing side is the relatively high zinc content and the process outputs, which are DRI and zinc concentrate. The furnace for the case discussed has an L/D ratio (length to internal furnace diameter) less than 10. The processing time of the metallic waste depends on the way the charge is mixed with the carbon-based reduction agents and can be anything between 0.5 to 20 hours, but on average 3 hours. An example of the progress of zinc evaporation is shown in Fig. 1. Following the initial pre-heating stage, fast reduction sets in, accompanied by the evaporation of zinc and lead. The lengths of the heating and reduction stages depend on the degree of reduction of the furnace space; the lower the utilisation, the shorter the process time. The attainable reduction degree is 30%, at which point economic aspects need be taken into consideration. A higher reduction degree implies higher energy costs and the more efficient removal of zinc, lead, and cadmium from the charge. The reduced material is bulked from the furnace to the cooler, where it is cooled in an oxygen-deficient atmosphere. Then the product is mechanically treated to permit subsequent magnetic separation. The removed and collected dust is also subjected to magnetic separation to produce the final Zn concentrate.

**Example 2 Metallic waste refining technology using reduction in solid state and continuous waste feeding into rotating furnace**

The equipment and technology have been designed to ensure the maximum thermal efficiency and minimum oxidation, within reasonable limits, of the charge and of the material reduced earlier. The requirements that it is necessary to satisfy include a high flame temperature, good heat transfer, and a strong reduction atmosphere in the furnace. The equipment proposed meets these requirements as follows: a high flame temperature is achieved by burning fossil fuels in combination with oxygen or a mixture of oxygen and preheated air. The reduction atmosphere is created by the direct addition into the charge of powdered coal, anthracite, coke, or semicoke, or other substances with a high carbon content. The reduction materials are added in a more than sufficient quantity so that the mixing of the input substances can also take place in the furnace during the process. The reduction temperature at the furnace end does not exceed 1200°C. The charge can be in the form of pellets or briquettes, or fed into the furnace without any pre-processing or initial drying. The charge is fed continuously.

Intense heat transfer is achieved by combining several heat-transfer mechanisms, such as:

- direct heating by a flame of the furnace charge at the stage when the surface temperature of the charge is still low;
- flame heat radiation on the charge and furnace lining upon reaching the charge surface temperature of 900°C;
- other heat transfer mechanisms associated with the operation of the rotating furnace:

    - agitation of the charge, in which relatively cool material appears on or close to the surface and heated material is transferred from the surface inside the charge bulk;
    - the mixing action moves the heated material inside the charge bulk, where it transfers heat to the surrounding cooler material;
    - heat from the furnace lining is transferred to the charge material coming into contact with the furnace body.

The proposed process is based on the reduction of a solid charge of metallic wastes containing zinc, lead, and cadmium with an aggregate content between 0.1 and 5% using fossil fuels in an environment of intense heat transfer. Suitable process conditions are created in a continuous oven-type rotating furnace. Sufficient heat transfer is facilitated by the agitation of the charge and the large area available for heat transfer: the charge is heated not only from the top, but also from the bottom.

The method used for the processing of metallic waste is similar to that used for ore processing in rotating furnaces. The main difference on the waste-processing side is the relatively high zinc content and the process outputs, which are DRI and zinc concentrate. The furnace for the case discussed has been extended with an L/D ratio (length to internal furnace diameter) greater than 10. The processing time of the metallic waste depends on the way the charge is mixed with the carbon-based reduction agents and can be anything between 0.5 to 20 hours. Following the initial preheating stage, fast reduction sets in, accompanied by the evaporation of zinc and lead. The lengths of the heating and reduction stages depend on the degree of utilisation of the furnace space; the lower the utilisation, the shorter the process time. The average reduction degree is in excess of 30%, and is usually as high as 60%. However, for basic zinc removal, metallisation of about 30% is sufficient. In setting the target reduction value, the economic aspects of the process should be taken into consideration. A higher reduction value implies higher energy costs, while the degree of zinc, lead, and cadmium removal is not significantly affected. The reduced material is bulked from the furnace into a continuous cooler, where it is cooled in an oxygen-deficient atmosphere. Then the product is mechanically treated to permit subsequent magnetic separation. The removed and collected dust is also subjected to magnetic separation to produce the final Zn concentrate.

**Example 3 Metallic waste refining technology using reduction in semi-liquid or liquid state and batch-wise waste feeding**

The equipment and technology have been designed to ensure the maximum thermal efficiency and minimum oxidation, within reasonable limits, of the charge and of the material reduced earlier. The requirements that it is necessary to satisfy include a high flame temperature, good heat transfer, and a strong reduction atmosphere in the furnace. The equipment proposed meets these requirements as follows: the high flame temperature is achieved by burning fossil fuels in combination with oxygen or a mixture of oxygen and preheated air. The reduction atmosphere is created by the addition of powdered coal, anthracite, coke, or semicoke, or other substances with a high carbon content. The reduction materials are added in a more than sufficient quantity. In the case of this equipment, the reduction temperature is in excess of 1150°C.

Intense heat transfer is achieved by combining several heat-transfer mechanisms, such as:

- direct heating by a flame of the furnace charge at the stage when the surface temperature of the charge is still low;
- flame heat radiation on the charge and furnace lining upon reaching the charge surface temperature of 900°C;
- agitation of the highly viscous slag;
- other heat transfer mechanisms associated with the operation of the rotating furnace:
  - agitation of the charge, in which relatively cool material appears on or close to the surface and heated material is transferred from the surface inside the charge bulk;
  - the mixing action moves the heated material inside the charge bulk, where it transfers heat to the surrounding cooler material;
  - heat from the furnace lining is transferred to the charge material coming into contact with the furnace body.

The proposed process is based on the reduction of a solid charge of metallic wastes containing zinc, lead, and cadmium with an aggregate content of the same in slag in a pasty-to-liquid state between 0.5 and 5% using fossil fuels in an environment of intense heat transfer. Suitable process conditions are created in an oven-type rotating furnace. Sufficient heat transfer is facilitated by the agitation of the charge and the large area available for heat transfer: the charge is heated not only from the top, but also from the bottom.

The method used for the processing of metallic waste is similar to that used for ore processing in rotating furnaces. The main difference on the waste-processing side is the relatively high zinc content and the process outputs, which are DRI and zinc concentrate. The furnace for the case discussed has an L/D ratio (length to internal furnace diameter) less than 10. The charge must be modified so that the $CaO/SiO_2$ ratio is 0.05 to 1.5 and the $SiO_2/Al_2O_3$ ratio is 1.5 to 8. This can be achieved by the addition of fine-grained $SiO_2$-base materials such as fine fractions of silica sand or various wastes rich in $SiO_2$ for example power-plant fly ash. The advantages of fly ash are its low price, very fine granulation, and the presence of carbon suitable for the reduction purposes. $Al_2O_3$, CaO, or MgO or their mixtures can also be added to the furnace charge. The chemical composition of the slag should be modified so as to ensure that the viscosity of the slag is high, with a pasty-to-honey-like consistency. The rolling of the slag in the oven-type rotating furnace helps facilitate the desired intense mass transfer inside the furnace and consequently consolidates the drops of reduced metal. The slag is saturated with materials prevailing in the composition of the furnace lining, which reduces the potential interaction between the slag and lining. The disadvantage of the use of low-basicity slag is the increased sulphur content of the reduced material. The sulphur content can be adjusted by the selection of suitable input materials, in particular the reduction agents. The process length depends on the manner in which the charge and the carbon-based reduction agents are mixed, and it can be anything between 0.5 and 20 hours. Following the initial heating stage, fast reduction sets in, with subsequent progressive iron carburising and smelting. Minute metal drops in the slag consolidate to form larger drops. The lengths of the heating and reduction stages depend on the degree of utilisation of the furnace space; the lower the utilisation, the shorter the process time. The reduction degree is typically between 30 and 60%, but higher metallisation values pose no problem for the equipment. In setting the target reduction value, the economic aspects of the process should be taken into consideration. A higher reduction value implies higher energy costs, while the degree of removal of zinc, lead, and cadmium is not significantly affected. The reduced material is bulked from the furnace into a cooler bin, where it is cooled jointly with the pasty slag in an oxygen-deficient atmosphere. Then the product is mechanically treated to permit subsequent magnetic separation. The reduced metal can be further processed to make iron in a blast furnace or pressed into blocks and used as a replacement for scrap in steel-making processes. The removed and collected dust is also subjected to magnetic separation to produce the final Zn concentrate.

**Example 4 Metallic waste refining technology using reduction in semi-liquid or liquid state and continuous waste feeding into rotating furnace**

The equipment and technology have been designed to ensure the maximum thermal efficiency and minimum oxidation, within reasonable limits, of the charge and of the material reduced earlier. The requirements that it is necessary to satisfy include a high flame temperature, good heat transfer, and a strong reduction atmosphere in the furnace. The equipment proposed meets these requirements as follows: a high flame temperature is achieved by burning fossil fuels in combination with oxygen or a mixture of oxygen and preheated air. The reduction atmosphere is created by the addition to the furnace charge of powdered coal, anthracite, coke, or semicoke, or other substances with a high carbon content. To ensure a high degree of reduction, the reduction materials are added in a more than sufficient quantity. In the case of this equipment, the reduction temperature is in excess of 1150°C.

Intense heat transfer is achieved by combining several heat-transfer mechanisms, such as:

- direct heating by a flame of the furnace charge at the stage when the surface temperature of the charge is still low;
- flame heat radiation on the charge and furnace lining upon reaching the charge surface temperature of 900°C;
- agitation of the highly-viscous slag;
- other heat transfer mechanisms associated with the operation of the rotating furnace:

    ○ agitation of the charge, where relatively cool material appears on or close to the surface and heated material is transferred from the surface inside the charge bulk;
    ○ the mixing action moves the heated material inside the charge bulk, where it transfers heat to the surrounding cooler material;
    ○ heat from the furnace lining is transferred to the charge material coming into contact with the furnace body

The proposed process is based on the reduction of the solid charge of metallic wastes containing zinc, lead, and cadmium with an aggregate content of the same in slag in a pasty-to-liquid state between 0.5 and 5% using fossil fuels in an environment of intense heat transfer. Suitable process conditions are created in an oven-type rotating furnace. Sufficient heat transfer is facilitated by the agitation of the charge and the large area available for heat transfer: the charge is heated not only from the top, but also from the bottom.

The method used for the processing of metallic waste is similar to that used for ore processing in rotating nodulising furnaces. The main differences on the waste-processing side are the relatively high zinc content in the furnace charge, the large quantity of dust fractions (in excess of 2% of the charge weight), and the furnace design, where the L/D ratio (length to internal furnace diameter) is greater than 10. The charge must be modified so that the $CaO/SiO_2$ ratio is 0.05 to 1.5 and the $SiO_2/Al_2O_3$ ratio is 1.5 to 8. This can be achieved by the addition of fine-grained $SiO_2$-base materials such as fine fractions of silica sand or various wastes rich in $SiO_2$ for example power-plant fly ash. The advantages of fly ash are its low price, very fine granulation, and the presence of carbon suitable for reduction purposes. $Al_2O_3$, CaO, or MgO, or their mixtures can also be added to the furnace charge. The chemical composition of the slag should be modified so as to ensure that the viscosity of the slag is high (the slag should be of a pasty consistency). The rolling of the slag in the oven-type rotating furnace helps facilitate the desired intense mass transfer inside the furnace and consequently consolidates the drops of reduced metal. The slag is saturated with materials prevailing in the composition of the furnace lining, which reduces the chemical interaction between the slag and lining. The disadvantage of the use of low-basicity slag is the increased sulphur content of the reduced material. The sulphur content can be adjusted by the selection of suitable input materials, in particular reduction agents. The process length depends on the manner in which the charge and the carbon-based reduction agents are mixed, and it can be anything between 0.5 and 20 hours. Following the initial heating stage, fast reduction sets in, with subsequent progressive iron carburising and smelting. Minute metal drops in the slag consolidate to form larger drops. The lengths of the heating and reduction stages depend on the degree of utilisation of the furnace space; the lower the utilisation, the shorter the process time. The reduction degree is typically between 30 and 60%, but higher metallisation values pose no problem for the equipment. In setting the target reduction value, the economic aspects of the process should be taken into consideration. A higher reduction value implies higher energy costs, but the results of the zinc, lead, and cadmium removal process will be better. The reduced material is bulked from the furnace into a cooler bin, where it is cooled jointly with the pasty slag in an oxygen-deficient atmosphere. Then the product is mechanically treated to permit subsequent magnetic separation. The reduced metal can be further processed to make iron in a blast furnace or pressed into blocks and used as a replacement for scrap in steel-making processes. The removed and collected dust is also subjected to magnetic separation to produce the final Zn concentrate.

## Claims

**1.** Method of refining metallic wastes rich in iron and originating from pig-iron or steel-making or metal processing, such as slurries and dust from steel-making, i.e. reducing the zinc and lead content using fossil fuels in conditions of intense heat transfer with increased overall thermal efficiency and accelerated mass transport, ***where*** the input metallic wastes unsuitable for immediate utilisation in a blast furnace or for agglomeration because of their high zinc content, i.e. a content in excess of 0.015%, or the presence of non-polar substances are first mixed with reduction agents, flux, and binding agents, where the content of metallic wastes is at least 40%;
the original waste granulation is modified so that the weight of the particles with a diameter in excess of 1 mm is at least 50% of the total waste weight; the reduction environment is created by the addition of materials with a high carbon content;
the quantity of the reduction agent, in kg of carbon in the reduction agent per kg of the metallic waste, is calculated on the basis of the waste composition free of flux and binding agents as follows:

$$C \text{ (kg of C per kg of metallic waste)} \geq 0.0065\ [(0.05\%Pb + 0.15\%Cd + 0.15\%Zn + 0.16\%MnO + 0.17\%FeO + 0.23\%Fe_2O_3) - \%C]$$

the waste treatment process takes place in a rotating furnace or a battery of rotating furnaces with batch or continuous charge feeding; in general, continuous furnaces are preferred because of their higher operational efficiency;
the high temperature needed to facilitate the endothermic reactions/processes of reduction and evaporation is achieved by means of a fossil-fuel burner where the type of fuel is not specific for the process and the burning process is supported by oxygen, a mixture of air and oxygen, or pre-heated air where the oxygen quantity is greater than that of the fuel by at least 2%;
the rotating furnace is filled with a charge occupying not more than 50% of the internal furnace space so that two separate zones might be naturally created, i.e. the oxidation and reduction/pre-heating zones;
the reduction and pre-heating zone is found in the part of the furnace occupied by the charge in condensed phase where the charge is subjected to heat and reduction to give rise to the output product with a significantly reduced zinc, lead, and cadmium content and a higher iron content;
the oxidation zone is found above the furnace charge where the combustion products accumulate and the reduction products such as carbon monoxide and gaseous metals (e.g.
zinc) are subjected to an oxidation process, giving rise to gases and dust, where the oxidation action is facilitated by feeding oxygen or pre-heated air into the space above the furnace charge, and where the oxygen/air quantity supplied is such that the $CO_2$ content in the combustion products at the furnace end is at least twice as high as that of CO;
in the arrangement described above, a combustion front is formed at the interface of said zones where the reduction products are oxidised by the free oxygen found in the furnace atmosphere to produce $CO_2$ and solid zinc, lead, and cadmium oxides;
in the above arrangement, gases may flow freely above the furnace charge, which makes for the easy extraction of the dust fractions rich in zinc, lead, and cadmium from the furnace space;
the actual process including the following steps and/or effects can be described as follows:

- intense mass and heat transfer is facilitated by the rotation of the furnace at a speed of at least 0.1 r.p.m. at a temperature above 400°C;
- the furnace charge is first dried and pre-heated;
- the waste-refining process commences upon the reduction and evaporation temperatures being reached; regarding the reduction of solid oxides, the recommended temperature is 900 to 1350°C, for the reduction of oxides in a pasty or liquid state, temperatures in excess of 1150°C;
- the process time depends on the required final zinc content determined by regularly repeated chemical analyses.

**2.** Method of refining metallic wastes as of Claim 1 above, ***where*** the output product is DRI with a metallisation degree of at least 25% (in the case of solid-state refining) or at least 50% (in the case of pasty- or liquid-state refining), where the aggregate zinc, lead, and cadmium content has been reduced to at least one third of the original value and where the process with more thorough reduction makes possible a 100-fold or greater reduction in the zinc, lead, and cadmium content.

**3.** Method of refining metallic wastes as of Claim 1 or 2 above, ***where*** the output refined product is force-cooled at a rate of at least 200°C/hour and subsequently subjected to magnetic separation, yielding an iron concentrate that may either be briquetted or used directly in steelworks as a replacement for scrap or agglomeration charge or processed in a blast furnace.

**4.** Method of refining metallic wastes as of any of Claims 1 through 3 above, ***where*** the second process product is zinc concentrate in which the zinc, lead, and cadmium content is at least 20 times greater than that in the original furnace charge with an aggregate zinc, lead, and cadmium content less than 1%; and is at least 10 times greater for an aggregate zinc, lead, and cadmium content in the original furnace charge between 1 and 2.5%, or at least 25% in cases where the aggregate zinc, lead, and cadmium content in the charge is in excess of 2.5%.

**5.** Method of refining metallic wastes as of any of Claims 1 through 4 above, ***where*** the second process product, i.e. the zinc concentrate is, upon cooling below the temperature of 350°C, further refined by means of magnetic separation so that the iron content in the Zn concentrate is further reduced and the separated iron is used directly in the steelworks or recycled in the rotating furnace.

## Patentansprüche

1. Die Art der Raffination von metalltragenden Abfällen, reich an Eisen, entstehend bei der Produktion von Roheisen, Stahl oder Metallbearbeitung, zum Beispiel Schlämme und Abstäube der Produktion von Stahl, Zink und Blei, mit Hilfe von Fossilbrennstoffen in Bedingungen des intensivierten Umstiegs der Wärme mit erhöhter Gesamtwärmewirksamkeit und dem beschleunigtem Transport von Masse, ***dadurch gekennzeichnet,* dass** sich die eintrittsmetalltragenden Abfälle, ungeeignet für direkte Nutzung in einem Hochofen oder Agglomeration aus Gründen des Zinkinhaltes d.h. mit Inhalten mehr als 0,015 %, gegeben falls auch Nichtpolarstoffen, zunächst mit minimal aus 40% vom metalltragenden Abfall, weiter Reduzierstoffen und Zusatzstoffen, welche Schlacke bilden und Bindemitteln mischen; die ursprüngliche Partikelgrößenanalyse des Abfalls wird so angepasst, damit minimal 50 hm% Partikel mit dem Durchmesser größer als 1 mm bilden; die Reduktionsbedingungen erreicht man mit einem Zusatz von Materialien mit einem höheren Inhalt von Kohlenstoff;
die Menge des dazugegebenen ist reduziert worden, festgelegt nach der Formel in kg Kohlenstoff im Reduktionsreagens pro kg metalltragenden Abfalls und wird aus der Zusammensetzung des Abfalls ohne Zusatz an Zusatzstoffen, welche Schlacke enthalten und Bindemittel, ausgerechnet:

$$C\ (\text{kg C/kg metalltragender Abfall}) \geq 0{,}0065\ [(0{,}05\ \%Pb + 0{,}15\ \%Cd + 0{,}15\%Zn + 0{,}16\ \%MnO\ + 0{,}17\ \%FeO + 0{,}23\ \%Fe_2O_3)\text{-}\%C]$$

und das eigentliche Verfahren der Bearbeitung wird in einem Drehrohrofen oder einer Batterie der Drehrohröfen und zwar entweder Dosis- oder Kontinueöfen durchgeführt, wobei wir allgemein kontinuierliche Einrichtungen wegen deren höheren Wirksamkeit bevorzugen; hohe Temperatur, notwendig für den Verlauf von endothermen Reaktionen der Reduktion und Verdunstung wird ins Prozess mit Hilfe eines Brenners auf fossile Brennstoffe geliefert, der eigentliche Prozess ist durch den Typ des Brennstoffes nicht begrenzt und für seine Verbrennung wird Sauerstoff, Luft, bereichert mit Sauerstoff oder vorgeheizte Luft, wobei der Sauerstoff im Überschuss und zwar mindestens um 2% zum Brennstoff sein muss, benutzt;
der Drehrohofen wird maximal bis 50% des inneren Volumens gefüllt, und zwar so, dass spontan zwei abgeteilte Zonen, das heißt eine Oxidationszone und eine Reduktionsvorheizzone entstehen;
die Reduktionsvorheizzone befindet sich in dem Teil des Ofens, wo sich die Charge in kondensierter Phase, welche schrittweise durch Wärme und die Reduktionsprozesse zum Ausgangsprodukt mit markant gesenktem Inhalt an Zink, Blei und Kadmium und erhöhtem Inhalt des Metalleisens umgeändert wird;
die Oxidationszone ist der Teil des Ofens über der Charge, im welchen Produkte des Brennens vom Brennstoff vorkommen und womit die Produkte der Reduktion oxidiert werden, d.h. der Kohlenstoffoxid und gasige Metalle, zum Beispiel Zink unter dem Entstehen von Gas und Staub, die Oxidationszone wird durch die Zufuhr von Sauerstoff oder vorgeheizter Luft in den Raum oberhalb der Charge und zwar in so einer Menge, damit der Inhalt von $CO_2$ in den Abgasen am Ende des Drehrohrofens minimal 2 mal höher als der Inhalt von CO ist gebildet;
der angeführte Fortgang führt zum Entstehen einer Brennfront am Schnittpunkt beider Zonen, an welchen die Produkte der Reduktion oxidiert werden durch freien Sauerstoff, welcher sich in der Atmosphäre des Ofens bei der Entstehung vom $CO_2$ und festen Oxiden des Zinks, Bleis und Kadmiums befindet;
die höher beschriebene Art der Füllung sichert freies Strömen von Gasen oberhalb der Charge ab, was zugleich einem einfachen Abzug von Staubbestandteilen, reich an Zink, Blei und Kadmium aus dem Ofen absichert;
der eigentliche Prozess, samt folgenden Schritte und/oder Effekte wird folgenderweise durchgeführt:

- die Identifizierung der Massen- und Wärmeübertragung wird durch das Drehen des Ofens und zwar mit einer Geschwindigkeit von mindestens 0,1 Umdrehung pro Minute bei einer Temperatur über 400 °C erzielt,
- zunächst wird die Trocknung und das Vorheizen der Charge durchgeführt,
- die eigentliche Abfallraffination beginnt nach dem Erreichen der ausreichenden Temperatur für die Reduktion und Verdunstung. Empfohlene Temperaturen liegen zwischen 900 bis 1350 °C für die Reduktion von Oxiden im festen Zustand und Temperaturen höher als 1150 °C für die Bearbeitung im teigartigen bis flüssigen Zustand,

die Verarbeitungszeit wird durch den endgültig geforderten Inhalt an Zink laut regelmäßig durchgeführten chemischen Analysen festgelegt.

2. Die Art der Bearbeitung von metalltragenden Abfällen laut Anspruch 1, ***dadurch gekennzeichnet,*** **dass** das Produkt der Raffination das direkt reduzierte Eisen (DRI) mit dem Grad der Mettalisierung von minimal 25% für die Raffination im festen Zustand und minimal von 50% für die Raffination im teigartigen bis flüssigem Zustand ist, wobei der zusammenfassende Inhalt von Zink, Blei und Kadmium hingegen dem ursprünglichen Inhalt mindestens auf ein Drittel gesenkt wird, wobei bei einer tieferen Reduktion es möglich ist endgültige Inhalte von Zink, Blei und Kadmium auch mehr als 100 mal niedriger, hingegen dem ursprünglichen Inhalt, zu erreichen.

3. Die Art der Bearbeitung von metalltragenden Abfällen laut Anspruch 1 oder 2, ***dadurch gekennzeichnet,*** **dass** das Produkt der Raffination beschleunigt mit einer Geschwindigkeit von minimal 200 °C/Stunde abgekühlt wird, folgend teilt es sich mit Hilfe der magnetischen Separation auf ein eisernes Konzentrat, welches entweder zu Briketts geformt wird, oder direkt im Stahlwerk als Schrottergänzung oder als Charge in die Agglomeration oder für den Hochofen genommen wird, oder es wird das Produkt der Raffination direkt im Stahlwerk als Schrottersatz oder als Charge in die Agglomeration oder den Hochofen benutzt.

4. Die Art der Bearbeitung von metalltragenden Abfällen laut einen der Ansprüche 1 bis 3, ***dadurch gekennzeichnet,*** **dass** das zweite Produkt des Prozesses ein Zinkkonzentrat ist, im welchen die Konzentration von Zink, Blei und Kadmium mindestens 20 mal höher als in der Charge mit dem summarischen Inhalt von Zink, Blei und Kadmium bis 1% ist; und zwar mindestens 10 mal höher als in der Charge für den summarischen Inhalt von Zink, Blei und Kadmium in der Charge zwischen 1 und 2,5 % ist und für den summarischen Inhalt von Zink, Blei und Kadmium in der Charge über 2,5 % der Inhalt dieser Elemente im Konzentrat minimal 25 % ist.

5. Die Art der Bearbeitung von metalltragenden Abfällen laut einem der Ansprüche 1 bis 4, ***dadurch gekennzeichnet,*** **dass** das zweite Produkt des Prozesses d.h. das Zinkkonzentrat nach der Abkühlung auf die Temperatur unter 350 °C mit Hilfe der magnetischen Separation weiter raffiniert wird, was zur Senkung des Eiseninhaltes im Zn-Konzentrat führt und das entfernte Teil wird direkt in der Stahlindustrie benutzt oder wird zurück in den Drehrohrofen wiederverwertet.

## Revendications

1. Le mode de raffinage des chutes métalliques riches en fer nées pendant la fabrication du fer brut, de l'acier ou pendant le travail des métaux, par exemple des écumes et des poussières pendant la fabrication de l'acier, du zinc et du plomb, à l'aide des combustibles fossiles dans les conditions de la transmission intensifiée de la chaleur avec le rendement calorifique total augmenté et avec le transport accéléré de la masse, ***caractérisé en ce que*** les chutes métalliques d'entrée impropre à l'usage direct dans un haut-fourneau ou bien agglomération en raison de la teneur en zinc, c'est-à-dire avec les teneurs plus que 0,015 %, éventuellement aussi des éléments non-polaires, deviennent mélangées tout d'abord des 40% des chutes métalliques, ensuite du corps réducteur et des additions fondantes et de l'agglomérant;
la granulométrie originelle des chutes devient traitée de manière que au minimum 50 % de masse soit les particules dont le calibre est plus qrand que 1 mm; on obtient les conditions réductives par l'addition des matériaux avec la teneur en carbone plus haute;
la quantité du corps réducteur additionné est définie selon la formule en kg de carbone dans l'agent réducteur sur kg de la chute métallique et elle devient calculée à la base de la composition de la chute sans l'addition des additions fondantes et des agglomérants:

$$C\ (\text{kg C/kg de la chute métallique}) \geq 0{,}0065\ [(0{,}05\ \%Pb + 0{,}15\ \%Cd + 0{,}15\%Zn + 0{,}16\ \%MnO\ + 0{,}17\ \%FeO + 0{,}23\ \%Fe_2O_3)\text{-}\%C]$$

dans lequel le procédé seul de traitement se passe dans un fourneau rotatif ou dans une batterie des fourneaux rotatifs et cela soit de dosage soit continus; en général on préfère les appareils continus pour leur efficacité plus haute;
on atteint la température élevée nécessaire pour le processus des réactions endothermiques de la réduction et évaporation en utilisant un brûleur à combustibles fossiles, le processus seul n'est pas limité par le type du combustible utilisé et pour le processus de combustion on utilise l'oxygène, l'air suroxygéné ou l'air préchauffé, l'oxygène est par rapport au combustible dans l'excès et cela au moins de 2%;
le fourneau rotatif est rempli au maximum à 50% de sa capacité intérieure et cela de manière que deux zones séparées naissent spontanément, c'est-à-dire la zone oxydante et la zone de préchauffage et de réduction;

la zone de préchauffage et de réduction se trouve dans la section du fourneau où existe la charge en phase condensée qui se modifie successivement sous l'action de la chaleur et des processus de réduction au produit de sortie avec la teneur beaucoup réduite en zinc, en plomb et en cadmium et la teneur augmenté en fer métallique;

la zone oxydante est la partie du fourneau au-dessus de la charge dans laquelle se trouvent les produits de la combustion et dans laquelle les produits de la réduction sont oxydés, c'est-à-dire l'oxyde de carbone et des métaux gazeux, par exemple le zinc au développement du gaz et de la poussière; la zone oxydante se crée par l'apport d'oxygène ou de l'air préchauffé dans l'espace au-dessus de la charge et cela dans un telle quantité que la teneur en $CO_2$ dans les produits de combustion au bout du fourneau rotatif soit au moins 2 fois plus haute que la teneur en CO;

le procédé mentionné donne lieu à la queue de la combustion à la frontière des deux zones sur laquelle les produits de la réduction sont oxydés par l'oxygène libre se trouvant dans l'atmosphère du fourneau au dégagement du $CO_2$ et des solides d'oxyde de zinc, de plomb et de cadmium;

la manière sus décrite du chargement assure l'écoulement libre des gaz au-dessus de la charge ce qui assure simultanément le tirage facile des éléments de poussière riche en zinc, plomb et cadmium du fourneau;

le processus seul, y compris les pas suivants et/ou les effets, est dirigé comme il suit :

- l'intensification de la transmission de la masse et de la chaleur est atteinte par la rotation du fourneau et cela à raison d'au minimum 0,1 tour à la minute pendant la température de plus que 400 °C,
- tout d'abord on effectue le séchage et le préchauffage de la charge,
- la raffinage seul des chutes commence après l'obtention de la température suffisante pour la réduction et l'évaporation. Les températures recommandées sont entre 900 à 1350 °C pour la réduction des oxydes solides et les températures au-dessus de 1150 °C pour le traitement sous forme pâteuse à liquide,

la durée de traitement est donnée par la teneur finale exigée en zinc selon des analyses chimiques effectuées régulièrement.

**2.** La manière de traitement des chutes métalliques selon la revendication 1, ***caractérisé en ce que*** le produit du raffinage est directement le fer réduit (DRI) avec le degré de la métallisation au minimum 25% pour le raffinage en état solide et au minimum 50% pour le raffinage en état pâteux à liquide; la teneur sommaire en zinc, en plomb et en cadmium contre la teneur originelle est diminuée d'au moins à un tiers et pour la réduction plus profonde il est possible d'obtenir les teneurs finales en zinc, plomb et cadmium même plus que 100 fois plus basses contre la teneur originelle.

**3.** La manière de traitement des chutes métalliques selon la revendication 1 ou 2, ***caractérisé en ce que*** le produit du raffinage est refroidi, la vitesse du refroidissement accéléré est au minimum 200 °C/heure, ensuite il est divisé par la séparation magnétique en concentré de fer qu'on briquète ou bien il s'utilise directement dans une aciérie comme l'équivalent du riblon ou comme la charge dans l'agglomération ou pour le haut-fourneau.

**4.** La manière de traitement des chutes métalliques selon une des revendications 1 à 3, ***caractérisé en ce que*** le second produit du processus est le concentré de zinc dans lequel la concentration du zinc, du plomb et du cadmium est au moins 20 fois plus haute que dans la charge avec la teneur sommaire en zinc, en plomb et en cadmium au max. 1 %; et elle est au moins 10 fois plus haute que dans la charge avec la teneur sommaire en zinc, en plomb et en cadmium entre 1 et 2,5 %; et dans la charge avec la teneur sommaire en zinc, en plomb et en cadmium plus que 2,5 % la teneur de ces éléments dans le concentré est au minimum 25%.

**5.** La manière de traitement des chutes métalliques selon une des revendications 1 à 4, ***caractérisé en ce que*** le second produit du processus, c'est-à-dire le concentré de zinc est ensuite raffiné après le refroidissement à la température de 350 °C par la séparation magnétique ce qui aboutit à la réduction de la teneur en fer en Zn concentré et la partie magnétique détachée est utilisée directement dans l'industrie sidérurgique ou elle est rentrée et recyclée dans un fourneau rotatif.

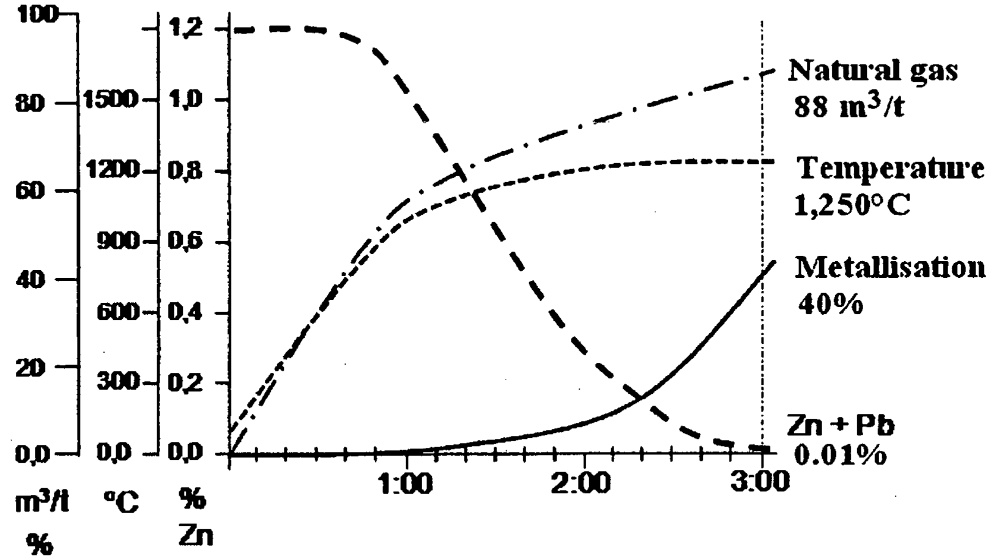


Fig. 1 Examples of temperature, Zn/Pb content, and metallisation values vs. time curves

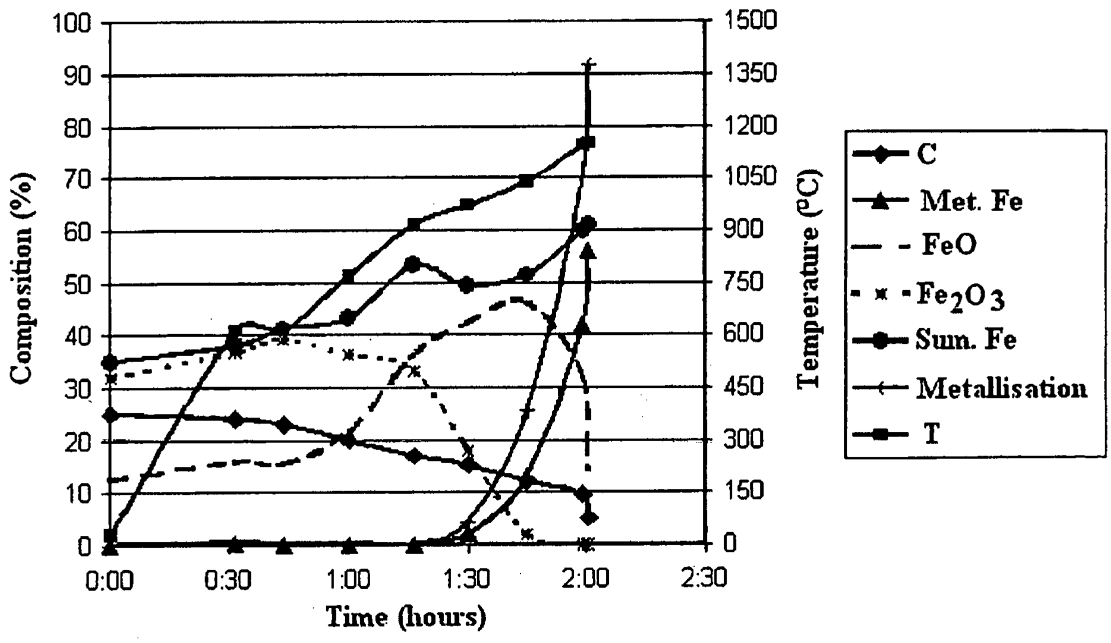


Fig. 2 Examples of changes in chemical composition of various iron forms and of the progress of metallisation

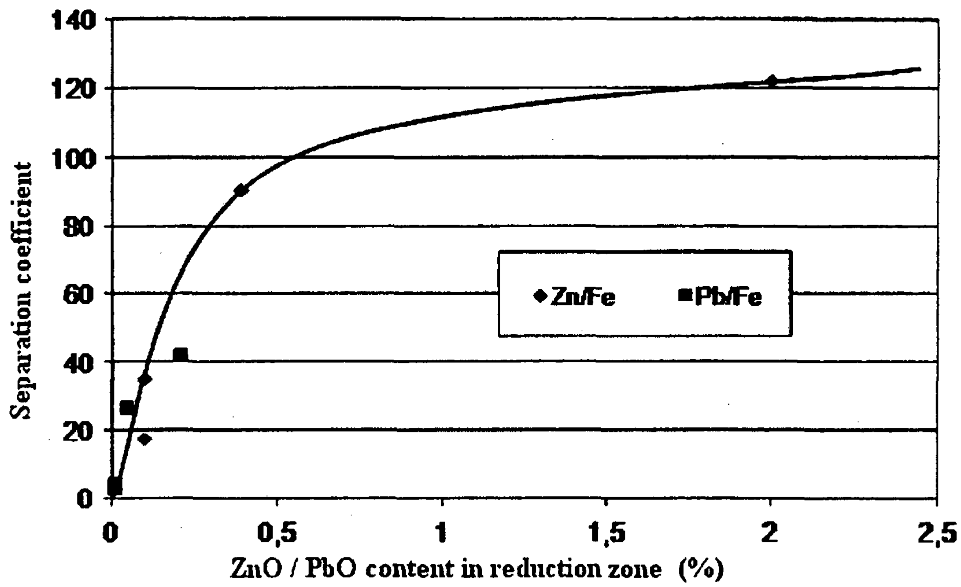


Fig. 3 Examples of Zn/Fe and Pb/Fe ratios in extracted dust following magnetic separation with respect to actual Zn and Pb content in the furnace charge

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0134336 A
- EP 0933436 A
- WO 9411536 A
- WO 9529137 A
- WO 9960172 A
- EP 0275863 A
- US 4105438 A
- US 3991987 A
- US 3514280 A
- US 4062674 A
- US 3689251 A
- US 5163997 A
- WO 9107127 A
- EP 0442040 A
- EP 0982407 A
- US 5141208 A
- US 20016012 B
- US 2002130448 A
- EP 0441052 A
- US 5188658 P
- CZ 295780
- CZ 297878